## Europäisches Patentamt
## European Patent Office
## Office européen des brevets

(19)

(11) Veröffentlichungsnummer: **0 081 127**
**B1**

(12) # EUROPÄISCHE PATENTSCHRIFT

(45) Veröffentlichungstag der Patentschrift:
29.04.87

(51) Int. Cl.⁴: **C 08 C 1/02,** C 08 L 21/02

(21) Anmeldenummer: **82110732.3**

(22) Anmeldetag: **20.11.82**

(54) **Verfahren zur Herstellung von fliessfähigen wässrigen Dispersionen von Polymerisaten konjugierter Diene.**

(30) Priorität: **04.12.81 DE 3148107**

(43) Veröffentlichungstag der Anmeldung:
**15.06.83 Patentblatt 83/24**

(45) Bekanntmachung des Hinweises auf die Patenterteilung:
**29.04.87 Patentblatt 87/18**

(84) Benannte Vertragsstaaten:
**BE DE FR GB IT NL**

(56) Entgegenhaltungen:
**EP-A-0 036 904**
**US-A-3 296 166**

**D.C. BLACKLEY: "High polymer latices", Band 1, 1966, Seiten 296-300, MacLaren & Sons Ltd., London, G.B.**

(73) Patentinhaber: **BAYER AG, Konzernverwaltung RP Patentabteilung, D-5090 Leverkusen 1 Bayerwerk (DE)**

(72) Erfinder: **Schmidt, Adolf, Dr., Roggendorfstrasse 67, D-5000 Köln 80 (DE)**

EP 0 081 127 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zur Herstellung einer unter Normalbedingungen fließfähigen, wäßrigen Dispersion auf Basis von Homo- und Copolymerisaten konjugierter Diene mit Feststoffgehalten von 25 bis 55 Gew.-% und durchschnittlichen Teilchendurchmessern von 20 bis 150 nm aus einer nach üblichen Verfahren hergestellten unter Normalbedingungen nicht fließfähigen, von Alkanpolysulfonaten freien wäßrigen Dispersion auf Basis von Homo- und Copolymerisaten konjugierter Diene durch Zusatz einer verdünnten wäßrigen Lösung eines wasserlöslichen Salzes mindestens eines Alkanpolysulfonats.

Es ist bekannt, daß zur Herstellung von wäßrigen Homo- und Copolymerisatdispersionen auf Basis von Butadien durch Polymerisation stets bestimmte Mengen an Elektrolyten wie z.B. Kaliumchlorid verwendet werden müssen, um einen fließenden und nicht pastenartigen Latex (Dispersion) zu erhalten (vgl. Houben Weyl, Methoden der organischen Chemie, Band XIV/I, 1961, Seite 722, Zeile 4).

So enthalten die Rezepturen der klassischen Kaltkautschukansätze (vgl. Houben Weyl wie oben, Band XIV/1, 1961, Seite 716 und Seite 717) wie auch die Ansätze mit Aminaktivierung (vgl. Houben Weyl, 1961, Band XIV/1, Seite 727) stets Elektrolyte wie Kaliumchlorid oder Alkaliphosphate. Daneben werden noch Natriumsalze von mit Formaldehyd kondensierten Naphthalinsulfonsäuren als Polymerisationshilfsmittel eingesetzt.

Nach diesen Polymerisationsverfahren lassen sich Latices mit Teilchengrößen von etwa 50 nm und Feststoffgehalten von ca. 25 bis 30 Gew.-% herstellen, welche unter Normalbedingungen frei fließen. Wird jedoch der Feststoffgehalt wesentlich über 30 Gew.-% angehoben, so werden auch diese Ansätze pastös. Um diesen Mangel zu beheben, wäre es denkbar, den Elektrolytgehalt und/oder den Gehalt an mit Formaldehyd kondensierten Naphthalinsulfonsäuren zu erhöhen.

Eine Erhöhung des Elektrolytgehalts über die üblicherweise verwendeten Mengen hinaus führt jedoch zur unerwünschten Koagulatbildung sowie zu einer drastischen Herabsetzung der Polymerisationsgeschwindigkeit. Erhöhte Mengen der Natriumsalze von mit Formaldehyd kondensierten Naphthalinsulfonsäuren tragen zur unerwünschten Dunkelfärbung der Latices bei. Ein weiterer Nachteil dieser Kondensationsprodukte liegt in ihrer mangelnden biologischen Abbaubarkeit und schafft somit Abwasserprobleme.

Aufgabe der vorliegenden Erfindung war es, aus nach üblichen Polymerisationsverfahren hergestellten, einen Feststoffgehalt von 25 bis 55 Gew.-% und einen Latexteilchendurchmesser von 20 bis 150 nm aufweisenden, unter Normalbedingungen nicht mehr frei fließfähigen wäßrigen Dispersionen auf Basis von Homo- und Copolymerisaten konjugierter Diene entsprechende, unter Normalbedingungen frei fließfähige, koagulatfreie Dispersionen herzustellen, ohne daß der Feststoffgehalt und die Teilchengröße wesentlich verändert werden. Natürlich sollten die für die Lösung dieser Aufgabe gegebenenfalls erforderlichen Zusätze auch keine Dunkelfärbung der Dispersionen oder starke Schaumbildung bewirken oder zusätzliche Probleme bei der Abwasseraufbereitung schaffen, das heißt, sie sollten biologisch abbaubar sein.

Die Aufgabe wurde dadurch gelöst, daß in den 25 bis 55 Gew.-% Feststoffgehalt und einen Latexteilchendurchmesser von 20 bis 150 nm aufweisenden, unter Normalbedingungen nicht fließfähigen, nach üblichen Verfahren hergestellten, von Salzen von Alkanpolysulfonat freien, wäßrigen Dispersionen auf Basis von Homo- und Copolymerisaten konjugierter Diene eine geringe Menge eines wasserlöslichen Salzes mindestens eines Alkanpolysulfonats in Form einer verdünnten wäßrigen Lösung gleichmäßig verteilt und in der wäßrigen Phase der Dispersion gelöst wird.

Aus der DE-A-30 12 821 (& EP-A-36 904) ist es zwar unter anderem bekannt, auch Polybutadien- und Polychloroprenlatices mit Feststoffgehalten bis über 50 Gew.-% herzustellen, indem ein Emulgatorsystem in üblichen Mengen (ca. 1 bis 5 Gew.-%, bezogen auf Monomere) bei der Polymerisation eingesetzt wird, das zu 50 bis 100 Gew.-% aus dem Alkalisalz eines Alkanpolysulfonats besteht. Hierbei werden jedoch Latices erhalten, die wegen ihrer Grobteiligkeit (durchschnittliche Latexteilchendurchmesser etwa 150 bis 500 nm) unter Normalbedingungen fließfähig sind. Gemäß der zitierten Schrift werden während der Polymerisation mit zunehmendem Anteil an Alkalisalzen eines Alkanpolysulfonats im Emulgatorsystem die Polymerisatteilchendurchmesser in der Dispersion so erhöht, daß ohne Koagulatbildung grobteilige und damit fließfähige Dispersionen mit hohem Feststoffgehalt entstehen.

Der zitierten Schrift war jedoch nicht zu entnehmen, und es wurde durch sie auch nicht nahegelegt, daß ein geringer Zusatz eines wasserlöslichen Salzes eines Alkanpolysulfonats zu einer nach üblichen Verfahren hergestellten, von Alkanpolysulfonatsalzen freien, unter Normalbedingungen nicht fließfähigen, wäßrigen Dispersion auf Basis von Homo- und Copolymerisaten konjugierter Diene die Viskosität einer solchen Dispersion ohne Koagulatbildung und Schaumbildung drastisch herabsetzt und sie fließfähig macht, ohne dabei die Latexteilchengröße zu verändern und den Feststoffgehalt der Dispersion merklich herabzusetzen.

Gegenstand der vorliegenden Erfindung ist somit ein Verfahren zur Herstellung einer unter Normalbedingungen fließfähigen, wäßrigen Dispersion auf Basis von Homo- und Copolymerisaten konjugierter Diene mit Feststoffgehalten von 25 bis 55 Gew.-% und durchschnittlichen Latexteilchendurchmessern von 20 bis 150 nm, dadurch gekennzeichnet, daß in einer nach üblichen Verfahren hergestellten, unter Normalbedingungen nicht fließfähigen, von Alkanpolysulfonatsalzen freien, wäßrigen Dispersion auf Basis von Homo- und Copolymerisaten konjugierter Diene 0,05 bis 0,5 Gew.-%, bezogen auf Feststoffgehalt der Dispersion, eines wasserlöslichen Salzes mindestens eines Alkanpolysulfonats in Form einer 5-35 Gew.-%igen wäßrigen Lösung gleichmäßig verteilt und in der wäßrigen Phase der Dispersion gelöst wird.

Unter dem Ausdruck "unter Normalbedingungen nicht fließfähig" wird in der vorliegenden Anmeldung eine

2

Viskosität von größer als 50 000 mPas, insbesondere größer als 100 000 mPas, gemessen bei Atmosphärendruck (ca. 1 bar) und 22°C (Zimmertemperatur) in einem Brookfield-Rotationsviskosimeter Spindel 4 bei 6 RPM (Umdrehungen pro Minute), verstanden. Fließfähig ist die Dispersion unter den vorgenannten Bedingungen des Druckes und der Temperatur sowie den gleichen weiteren Meßbedingungen, wenn eine Viskosität von kleiner als 50 000 mPas, vorzugsweise 10 000 bis 30 000 mPas, insbesondere kleiner als 10 000 mPas, erreicht wird.

Vorzugsweise besitzen die erfindungsgemäß erhaltenen und die für das Verfahren der Erfindung eingesetzten Dispersionen einen durchschnittlichen Latexteilchendurchmesser von 25 bis 100 nm, das heißt, sie sind äußerst feinteilig.

Die konjugierten Diene besitzen vorzugsweise 4 bis 6 C-Atome und können durch ein oder zwei Chloratome substituiert sein. Besonders bevorzugt sind Butadien, Isopren und Chlorbutadien (Chloropren), insbesondere Butadien.

Die Copolymerisate der konjugierten Diene enthalten neben polymerisierten Dieneinheiten copolymerisierte Einheiten von vorzugsweise Acrylnitril, Styrol, Methylstyrol, (Meth)Acrylsäureestern mit-vorzugsweise 1 bis 4 C-Atomen in der Alkoholkomponente, (Meth)Acrylsäure oder deren Mischungen, Itaconsäure, insbesondere von Acrylnitril und/oder Styrol.

Die Homopolymerisate der konjugierten Diene sind bevorzugt, insbesondere Polybutadien.

Die für das erfindungsgemäße Verfahren einzusetzenden, nicht fließfähigen wäßrigen Dispersionen der Homo- und Copolymerisate konjugierter Diene sind nach üblichen bekannten Verfahren und mit den üblichen bekannten Hilfsmitteln (z.B. Initiatoren, Emulgatoren, Regler, Elektrolyten, Schwermetallkatalysatoren) erhalten worden (vgl. Methoden der organischen Chemie, Houben Weyl, Band XIV/1, 1961, Seiten 630 bis 752 oder die Monographie "Emulsion Polymerisation" von D.C. Blackley, Applied Science Publishers LTD, 1975, London). Sie sind stets im wesentlichen frei von Salzen eines Alkanpolysulfonats. Ihr Feststoffgehalt liegt bei ca. 25 bis 55 Gew.-% und der mittlere Latexteilchendurchmesser bei 20 bis 150 nm, vorzugsweise 25 bis 100 nm.

Die den erfindungsgemäß einzusetzenden Salzen der Alkanpolysulfonsäuren zugrundeliegenden Alkanpolysulfonsäuren enthalten zwei oder mehr Sulfonsäuregruppen, vorzugsweise 2 bis 4, insbesondere 2 bis 3 Sulfonsäuregruppen pro Molekül. Der Alkanrest der Alkanpolysulfonsäure ist gesättigt, linear oder verzweigt und enthält im Mittel etwa 8 bis 22, vorzugsweise 13 bis 17 C-Atome. Vorzugsweise wird ein Gemisch der vorstehend definierten Alkanpolysulfonsäuren eingesetzt.

Als wasserlösliche Salze der Alkanpolysulfonsäuren kommen vorzugsweise Metallsalze, insbesondere Alkalimetallsalze infrage. Von den letztgenannten seien die Natrium- und Kaliumsalze genannt, insbesondere die Natriumsalze.

Die Herstellung der Alkanpolysulfonsäuren und ihrer Salze ist an sich bekannt. Beispielsweise kann man sie durch Sulfochlorierung der Alkane und anschließende Verseifung mit einer Base herstellen (vgl. Chemie und Technologie der Paraffin-Kohlenwasserstoffe, Akademie Verlag, Berlin, 1956, Seiten 395 bis 474). Durch Umsetzung der Alkanpolysulfonsäuren und Metallhydroxid kann man zu den entsprechenden Salzen gelangen. In vielen Fällen verseift man die Alkanpolysulfochloride mit der doppelten stöchiometrischen, für die Verseifung notwendigen Menge des Metallhydroxids und erhält in einem Arbeitsgang die entsprechenden Metallsalze der Alkanpolysulfonsäure neben dem entsprechenden Metallchlorid.

Die bei der möglichst weitgehenden Sulfochlorierung und anschließenden Verseifung erhaltenen Alkanpolysulfonate enthalten in den meisten Fällen noch untergeordnete Mengen am Alkanmonosulfonaten. Diese können beispielsweise durch Extrahieren mit Diethylether oder Alkoholen abgetrennt werden. Sie können jedoch auch im Reaktionsgemisch verbleiben. Die erfindungsgemäß einzusetzenden Salze der Alkanpolysulfonate können daher bis zu 20 Gew.-% an Salzen der entsprechenden Alkanmonosulfonate enthalten. Der Begriff "Alkanpolysulfonat", verwendet in der vorliegenden Anmeldung, schließt somit auch Alkanpolysulfonate ein, die bis zu 20 Gew.-% Alkanmonosulfonat enthalten.

Die Salze der Alkanpolysulfonate werden als 5 bis 30%ige wäßrige Lösungen (Gew.-%), vorzugsweise als 8 bis 10%ige wäßrige Lösungen, eingesetzt.

Die wäßrigen Lösungen der Salze der Alkanpolysulfonate werden den unter Normalbedingungen nicht fließfähigen wäßrigen Dispersionen auf Basis von Homo- und Copolymerisaten konjugierter Diene unter möglichst intensivem Rühren nach Beendigung der Polymerisation zu einem beliebigen Zeitpunkt oder kurz vor Beendigung der Polymerisation, wenn das Eintreten der Nichtfließfähigkeit erkennbar wird (z.B. durch Viskositätsmessung gezogener Proben im DIN-Auslaufbecher), kontinuierlich oder diskontinuierlich zugesetzt, durch weiteres Rühren gleichmäßig verteilt und dabei in der wäßrigen Phase der Dispersion gelöst. Durch die erzielte Viskositätserniedrigung sind die Dispersionen trotz der Feinteiligkeit der Partikel und der verhältnismäßig hohen Feststoffgehalte bequem zu handhaben, beispielsweise schon beim Entfernen aus den Reaktionskesseln (Autoklaven), beim Ab- und Umfüllen in oder aus beliebigen Behältern, beim Vermischen mit anderen Dispersionen oder beim Entfernen der Restmonomeren aus den Rohlatices.

Die erfindungsgemäß erhaltenen Dispersionen sind als Bindemittel für die Imprägnierung textiler Flächengebilde, für die Imprägnierung und Verfestigung von Faservliesen geeignet. Sie können auch als Vorstufen zur Herstellung schlagzäher Kunststoffe eingesetzt werden und sind sowohl chemisch als auch physikalisch agglomerierbar.

Die in den Beispielen angegebenen Teile und Prozentangaben beziehen sich auf das Gewicht, wenn nicht anders vermerkt.

## A. Herstellung eines Natriumalkanpolysulfonats

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gewichtsteil Schwefeldioxid und 1,0 Gewichtsteil Chlor bei einer Temperatur von 30 bis 40°C unter Rühren und gleichzeitigem Kühlen sulfochloriert. Die Sulfochlorierung wird so lange durchgeführt, bis das Reaktionsgemisch eine Dichte von 1,250 g/cm³ bei 45°C hat. Der Sulfochlorgehalt ist dann bei 18,0 - 18,5 Gew.-%.

200 g des Sulfierungsgemisches werden tropfenweise zu 170 g 50 gew.-%iger Natronlauge gegeben, die auf 50 bis 60°C erwärmt wurde. Durch Kühlen wird das Reaktionsgemisch auf einer Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die vom Niederschlag befreite Lösung wird im Vakuum zur Trockne eingedampft. Man erhält hierbei ein Gemisch aus 8 g NaCl und 139 g Natriumalkansulfonat. Das Natriumalkansulfonat besteht aus:

13,2 Gew.-% Natriumalkan-monosulfonat
86,8 Gew.-% Natriumalkan-polysulfonat

Dieses Substanzgemisch, bestehend aus Natriumalkanpolysulfonat, Natriumalkanmonosulfonat und etwas Kochsalz, kann erfindungsgemäß ohne weitere Reinigung als wäßrige Lösung eingesetzt werden (in den Beispielen wird es als Natriumalkanpolysulfonatlösung A-1 bezeichnet).

Soll die in der Viskosität herabzusetzende Dispersion (der Latex) möglichst salzarm bleiben, kann ein beispielsweise nach folgender Prozedur gereinigtes Natriumalkanpolysulfonat eingesetzt werden:

Das obige Substanzgemisch wird zunächst fein pulverisiert.

100 Teile des trockenen Pulvers werden dann mit 100 Teilen wasserfreiem Ethanol bei 40°C 120 Minuten intensiv verrührt. Dabei gehen ca. 13 % des Substanzgemisches in Lösung. Der Vorgang wird nach Absaugen des ungelöst gebliebenen Hauptanteiles mit der gleichen Ethanolmenge wiederholt. Bei der zweiten Extraktion entsteht eine ca. 8 %ige Ethanollösung.

Die beiden Ethanolextrakte enthalten das im ursprünglichen Substanzgemisch enthaltene Natriumalkanmonosulfonat sowie einen Anteil Polysulfonat.

100 Teile des mit Ethanol vorbehandelten Rückstandes werden mit 650 Teilen wasserfreiem Methanol unter intensivem Rühren 10 Stunden am Rückfluß behandelt, wonach die Lösung noch heiß vom zurückgebliebenen Kochsalz abfiltriert wird.

Das Methanolfiltrat wird im Vakuum zur Trockne eingedampft (Rotationsverdampfer), der Rückstand pulverisiert. Aus ihm können wäßrige Lösungen bereitet werden, welche erfindungsgemäß verwendet werden (Bezeichnung: Natriumalkanpolysulfonatlösung A-2, vgl. Beispiel 1 Tabelle 1b).

## B. Herstellung einer Polybutadiendispersion (Viskosität ca. 55 000 mPas)

In einen in einem Abzug befindlichen 40-Liter-Edelstahlautoklaven mit Blattrührer, Zuleitungsstutzen, Bodenventil, Mantelkühlung, Druck- und Temperaturmeßvorrichtungen sowie elektronischer Innentemperaturregelung werden nach Evakuieren, Spülen mit Stickstoff sowie erneutem Evakuieren eingefüllt:

```
Entionisiertes Wasser                          11 500 g

15 %ige, wäßrige Kaliumoleatlösung              3 500 g

Butadien, frisch destilliert                    6 500 g
```

Die Innentemperatur wird unter Rühren (120 Umdrehungen pro Minute) auf +5°C eingestellt. Danach werden aus kleinen Nachdosiergefäßen nacheinander folgende Lösungen eingedrückt:

```
Lösung A:        Entionisiertes Wasser           500 g

                 Natriumformaldehydsulfoxylat     6,9 g


Lösung B:        Butadien                         400 g

                 p-Menthanhydroperoxid, 50 %ige

                 Lieferform                        33 g
```

| Lösung C: | Entionisiertes Wasser | 500 g |
|---|---|---|
| | 0,25 molare Lösung von Eisen-II- | |
| | sulfat, komplexiert mit ethylen- | |
| | diamintetraessigsaurem Natrium | |
| | in Wasser | 24,0 g |

Die Polymerisation setzt sofort nach Injektion der Lössungen A, B und C ein. In Abständen von 60 Minuten gezogene Proben zeigen nach dem Entfernen des Butadiens folgende Feststoffgehaltswerte:

| Probe Nr. | Polymerisationsdauer (min) | Feststoffgehalt (%) |
|---|---|---|
| 1 | 60 | ca. 6 |
| 2 | 120 | ca. 9 |
| 3 | 180 | ca. 12 |
| 4 | 240 | ca. 16 |
| 5 | 300 | ca. 21 |
| 6 | 360 | ca. 25 |
| 7 | 420 | ca. 30 |

Ab Probe 4 beginnt die Viskosität des Latex im Autoklav zuzunehmen und die Abführung der Polymerisationswärme gestaltet sich zunehmend schwieriger. Zwischen Probe 6 und 7 steigt die Innentemperatur trotz guter Außenkühlung (-10°C) auf ca. +20°C, um dann wieder rasch abzufallen.

Nach Beendigung der Polymerisation bei einem Feststoffgehalt von ca. 30 Gew.-% werden 8,6 g Diethylhydroxylamin, gelöst in 200 ml Wasser, als Stopper zudosiert und danach die Dispersion aus dem Autoklaven mit leichtem Stickstoffüberdruck (ca. 0,5 bar) herausgedrückt.

Probenabfall: 700 g

Nettogewicht Rohlatex: 20,6 kg

Nach dem Ausrühren der pastösen Dispersion unter einem Abzug und nach deren Erwärmung auf Zimmertemperatur (22°C) ergeben sich folgende die Dispersion kennzeichnende Daten:

Feststoffgehalt: ca. 30 Gew.-%

pH-Wert: 10,4

Elektrische Leitfähigkeit: 3,8 mS (mS bedeutet Millisiemens)

(0,746 g KCl pro Liter Wasser zeigten bei dem verwendeten Leitfähigkeitsmeßgerät eine Leitfähigkeit von 1,4 mS).

Latexteilchendurchmesser, bestimmt mit Hilfe der Laserkorrelationsspektroskopie: 39 nm.

Zur Beurteilung des Viskositätsverhaltens verwendete man ein Brookfield-Synchro-Lectric-Viskosimeter, Modell LVF, Präzisionsinstrument der Brookfield Engin. Laboratories Inc. Hierbei wurden die Messungen mit Hilfe der diesem Gerät beigegebenen vier verschiedenen Prüfkörper (PK 1 bis 4) bzw. "spindles 1 bis 4" bei verschiedenen Umdrehungsgeschwindigkeiten:

6, 12, 20, 60 RPM (Umdrehungen pro Minute)

bei einer Temperatur von +22°C durchgeführt.

Falls möglich, ermittelte man auch die Auslaufzeit der Dispersionen im Auslaufbecher gemäß DIN 53 211. Die vorliegende, gemäß Vorschrift B hergestellte Dispersion war so zähflüssig, daß sie im Auslaufbecher selbst bei Verwendung der Düse mit einer lichten Weite von 8 mm nicht durchlief. Folgende Brookfield-Viskositäten wurden gemessen (Temperierung der Dispersion auf genau +22°C):

| Spindel 4 | 6 RPM | 55 000 mPas |
|---|---|---|
| | 12 RPM | 26 000 mPas |
| | 30 RPM | 13 900 mPas |
| | 60 RPM | 8 360 mPas |

## C. Herstellung einer Polybutadiendispersion (Viskosität > 100 000 mPas)

In einen 40-Liter-Autoklav gemäß B werden nach Evakuieren, Spülen mit Stickstoff eingefüllt:

| | |
|---|---|
| Entionisiertes Wasser | 7 133 g |
| Kaliumoleatlösung 14 %ig | 7 867 g |
| Butadien, frisch destilliert | 6 500 g |

Die Innentemperatur wird unter Rühren (120 Umdrehungen pro Minute) auf +5°C eingestellt. Danach werden aus kleinen Nachdruckgefäßen nacheinander folgende Lösungen in je 5 min zugepumpt:

| | | |
|---|---|---|
| Lösung A: | Entionisiertes Wasser | 500 g |
| | Natriumformaldehydsulfoxylat | 6,9 g |
| | | |
| Lösung B: | Butadien | 500 g |
| | p-Menthanhydroperoxid, 50 %ige | |
| | Lieferform | 33 g |
| | | |
| Lösung C: | Entionisiertes Wasser | 500 g |
| | 0,25 molare wäßrige Lösung von | |
| | Eisen-II-sulfat, komplexiert mit | |
| | ethylendiamintetraessigsaurem | |
| | Natrium | 24,0 g |

Die Polymerisation setzt sofort nach Injektion der Lösungen A, B und C ein. In Abständen von 60 Minuten gezogene Proben weisen nach dem Entfernen des Butadiens folgende Feststoffgehaltswerte auf:

| Probe Nr. | Polymerisationsdauer (min) | Feststoffgehalt (%) |
|---|---|---|
| 1 | 60 | 9 |
| 2 | 120 | 11 |
| 3 | 180 | 15 |
| 4 | 240 | 18 |
| 5 | 300 | 21 |
| 6 | 360 | 25 |
| 7 | 420 | 30 |

Ab Probe 5 beginnt die Viskosität des Latex im Autoklav stark zuzunehmen und die Abführung der Polymerisationswärme wird zunehmend schwieriger. Bei der Entnahme der Probe 7 ist die Innentemperatur auf +35°C gestiegen trotz einer außen angelegten Solemantelkühlung von -10°C.

Danach wird der Ansatz durch Zugabe von 8,6 g Diethylhydroxylamin in 200 g Wasser abgestoppt und abgelassen.

| | |
|---|---|
| Probenabfall: | 410 g |
| Nettogewicht Roh-latex: | 20,7 kg |

Die Dispersion ist außerordentlich zähflüssig. Nach ihrem Ausrühren unter einem Abzug und nach ihrer Erwärmung auf Zimmertemperatur (22°) ergeben sich folgende die Dispersion kennzeichnende Daten:

Feststoffgehalt:                  ca. 30 Gew.-%

pH-Wert:                          11,2

Elektrische Leitfähigkeit:        5,9 mS (Millisiemens);

0,746 g Kaliumchlorid pro Liter Wasser zeigten bei dem verwendeten Leitfähigkeitsmeßgerät eine Leitfähigkeit von 1,4 mS.

Latexteilchendurchmesser: 33 nm, bestimmt mit der Laserkorrelationsspektroskopie.

Viskositätsverhalten: Die Viskosität des Latex lag außerhalb des Meßbereichs des verwendeten Brookfield-Synchro-Lectric-Viskosimeters, Modell LVF (größer als 100 000 mPas bei Spindel 4 und 6 RPM). Bei dieser hohen Viskosität war auch eine Messung in einem Auslaufbecher gemäß DIN 53 211 nicht möglich.

### D. Herstellung eines Butadien-Styrol-Latex, (Viskosität 51000 mPas)

In einen 40-Liter-Autoklaven gemäß B werden nach Evakuieren und Spülen mit Stickstoff wie nachstehend beschrieben eingefüllt:

A     Entionisiertes Wasser                 12 000 g

      Kaliumoleatlösung 15 %ig, wäßrig       5 000 g


B     p-Methanhydroperoxid, 50 %ige

      Lieferform                                25 g


C     tert.-Dodecylmercaptan                  14,4 g


D     0,25 molare wäßrige Lösung von Eisen-II-

      sulfat, komplexiert mit ethylendiamin-

      tetraessigsaurem Natrium                15,0 g


E     Entionisiertes Wasser                    500 g

      Natriumformaldehydsulfoxylat             6,5 g


F     Butadien                               8 000 g

      Styrol                                 3 450 g

A wird unter Ausschluß von Luftsauerstoff im Autoklav vorgelegt, danach kommen nach Abkühlen dieser Emulgatorlösung auf +5°C B, C, D sowie das Monomerengemisch F hinzu.

Man stellt die Temperatur erneut auf +5°C ein, rührt eine Stunde bei +5°C zur Erreichung eines physikalischen Gleichgewichts und startet die Polymerisation danach durch Injektion von E. Rührgeschwindigkeit: 120 Umdrehungen pro Minute.

Nach 7 1/2 Stunden Polymerisationszeit beginnt die Innentemperatur merklich zu steigen (Außenmanteltemperatur konstant -10°C) und erreicht nach ca. 10 Stunden ein Maximum mit +25°C. Nach ca. 15 Stunden Polymerisationszeit ist ein Feststoffgehalt von 38 % erreicht und der Ansatz wird mit einer Lösung von 6,5 g Diethylhydroxylamin in 200 g Wasser abgestoppt. Danach wird der Autoklaveninhalt mit Stickstoff herausgedrückt und im Abzug ausgerührt.

Der Rohlatex besitzt einen Feststoffgehalt von 38 %, einen pH-Wert von 11, eine elektrische Leitfähigkeit von 3,9 mS, einen Latexteilchendurchmesser von 55 nm, gemessen mit Hilfe der Laser-Korrelationsspektroskopie, und eine Viskosität von ca. 55 000 mPas, gemessen mit Spindel 4 des Brookfield-Viskosimeters bei 6 Umdrehungen pro Minute und bei 22°C.

Der Latex wird im Vakuum von Restmonomeren befreit, wobei so viel Wasser ergänzt wird wie überdestilliert. Insgesamt werden ca 10 % des im Latex befindlichen Wassers abdestilliert und durch eine entsprechende Menge frisches entionisiertes Wasser ergänzt.

Der entmonomerisierte, auf einen Feststoffgehalt von 38 % genau eingestellte Latex besaß eine Latexteilchengröße von 55 nm und eine Viskosität von ca. 51 000 mPas, gemessen mit Spindel 4 des Brookfield-Viskosimeters bei 6 Umdrehungen pro Minute und bei 22°C.

**E. Herstellung eines Butadien-Acrylnitril-Latex (Viskosität > 100 000 mPas)**

In einen 40-Liter-Autoklav gemäß B werden nach Evakuieren und Spülen mit Stickstoff wie nachstehend beschrieben eingefüllt:

| | | |
|---|---|---|
| A | Entionisiertes Wasser | 12 750 g |
| | Kaliumoleatlösung 15 %ig in Wasser | 4 516 g |
| B | p-Menthanhydroperoxid, | 50,0 g |
| | 50 %ige Lieferform | |
| C | Eisen-II-sulfat, komplexiert mit | |
| | ethylendiamintetraessigsaurem Natrium, | |
| | 0,25 molare·wäßrige Lösung | 22,5 g |
| D | Entionisiertes Wasser | 1 000 g |
| | Natriumformaldehydsulfoxylat | 13, 0 g |
| E | Butadien | 7 200 g |
| | Acrylnitril | 800 g |
| | tert. Dodecylmercaptan | 14,4 g |

A wird vorgelegt, danach wird auf 5°C abgekühlt. Nach Spülen mit Stickstoff kommen B, C, E hinzu. Nach Einstellen einer Temperatur von +5°C im Autoklav wird die Polymerisation durch Zugabe von D (Natriumformaldehydsulfoxylatlösung) gestartet.

Die Polymerisation setzt unmittelbar nach Injektion der Lösung D ein. Nach Zugabe von D wurden stündlich Proben gezogen und deren Feststoffgehalt bestimmt:

| Probe Nr. | Polymerisationszeit (min) | Feststoffgehalt |
|---|---|---|
| 1 | 60 | 5,0 |
| 2 | 120 | 7,0 |
| 3 | 180 | 11,7 |
| 4 | 240 | 16,1 |
| 5 | 300 | 19,5 |
| 6 | 360 | 24,5 |
| 7 | 420 | 32,0 |

Nach Probe 5 beginnt trotz Außenkühlung (-10°C) die Innentemperatur zu steigen, erreicht bei Probe 6 einen Wert von ca. +15°C und bei der Probe 7 einen Wert von ca. +40°C.

Unmittelbar nach Probe 7 wird der Ansatz durch Zugabe von 15 g Diethylhydroxylamin, gelöst in 200 g Wasser abgestoppt und abgelassen. Aus dem Autoklav wird eine schaumige, pastöse, zähe Masse herausgedrückt, deren Viskosität (>100 000 mPas) außerhalb des Meßbereichs des Brookfield-Viskosimeters (Spindel 4, 6 RPM, 22°C) liegt und welche nicht fließfähig ist. Sie wird in einem emaillierten Gefäß gesammelt.

Die Latexteilchengröße der pastösen Dispersion liegt bei 41 nm, gemessen mit der Laserkorrelationsspektroskopie.

**Beispiel 1** (erfindungsgemäß)

Zu 200 Teilen der nach B hergestellten Polybutadiendispersion werden unter Rühren (200 Umdrehungen pro Minute) insgesamt 0,6; 0,8; 1,0; 1,2; 1,4; 1,6 Teile einer 9,5 %igen wäßrigen Lösung des nach A-1 hergestellten Natriumalkanpolysulfonats bei t = 22°C zugesetzt.

Die erste Portion (0,6 Teile) kommt auf einmal hinzu, die nachfolgenden Portionen werden in Schritten von jeweils 0,2 Teilen hinzugegeben (vgl. Tabelle 1a).

Die Zugabe jeder Portion erfolgt innerhalb von ca. 5 Min., dann wird 10 Minuten nachgerührt und danach die Brookfield-Viskosität mit Spindel 4 bei verschiedenen Umdrehungsgeschwindigkeiten gemessen. Die vorstehende Verfahrensweise wird in allen Beispielen der vorliegenden Anmeldung angewendet.

Den in Tabelle 1a angegebenen Prüfwerten ist der drastische viskositätsmindernde Effekt des Polysulfonatzusatzes zu entnehmen. Die Viskositäten können auch nach mehrtägigen und mehrwöchigen Standzeiten nachgemessen werden. Man findet dann im wesentlichen dieselben Ergebnisse, das heißt, der viskositätsvermindernde Effekt ist nachhaltig.

Der nach Zugabe von insgesamt 1,6 Gew.-Tln 9,5 gew.-%iger Polysulfonatlösung zu 200 g Dispersion erhältliche, in der Viskosität stark herabgesetzte Latex ist im Gegensatz zur Ausgangsdispersion fließfähig und zeigt im Auslaufbecher gemäß DIN 53 211 eine Auslaufzeit von 19,3 Sekunden bei einer Düse von 8 mm lichter Weite. Nach 3-tägigem Stehen der Dispersion in einem verschlossenen Gefäß wurde eine Auslaufzeit von 18,9 Sekunden (Düse 8 mm lichte Weite) gemessen.

Durch den Polysulfonatzusatz wurde die Teilchengröße der Dispersion nicht verändert. Wurde am Ausgangslatex ein mittlerer Teilchendurchmesser von ca. 39 nm gemessen, so wurde nach Zusatz des Polysulfonats ein Wert von ca. 40 nm gefunden, der innerhalb der Meßgenauigkeit der Laserkorrelationsspektroskopie liegt.

Ferner trat beim Polysulfonatzusatz zur Dispersion keinerlei Koagulatbildung oder eine lästige Schaumbildung auf.

Wird anstelle der Polysulfonatlösung gemäß A-1 eine entsprechende, kochsalz- und monosulfonatfreie Polysulfonatlösung gemäß A-2 zur Dispersion B zugesetzt (vgl. Meßergebnisse der Tabelle 1b), so werden praktisch dieselben Resultate erzielt. Die im Abschnitt A geschilderte Reinigungsprozedur zur Herstellung eines praktisch kochsalz- und monosulfonatfreien Natriumalkanpolysulfonats ist zur Erzielung des viskositätsmindernden Effekts daher nicht unbedingt erforderlich.

**Tabelle 1a**

| Vorgelegt: 200 Tle Dispersion B Zugabe in Gew.-Tln. insgesamt* an 9,5 %iger wäßriger Natriumalkanpoly-sulfonatlösung, hergestellt gemäß A1 | 0 | 0,6 | 0,8 | 1,0 | 1,2 | 1,4 | 1,6 |
|---|---|---|---|---|---|---|---|
| Brookfield-Viskosimeter Spindel 4, 22°C Umdrehungen pro Minute (RPM): | | | | | | | |
| 6 RPM, Viskosität in mPas | 55 000 | 19 700 | 5 700 | 4 100 | 2 100 | 1 500 | 800 |
| 12 RPM, Viskosität in mPas | 26 000 | 15 200 | 5 350 | 4 150 | 2 200 | 1 500 | 850 |
| 30 RPM, Viskosität in mPas | 13 900 | 9 180 | 4 320 | 3 580 | 2 060 | 1 400 | 900 |
| 60 RPM, Viskosität in mPas | 8 360 | 5 800 | 3 230 | 2 830 | 1 820 | 1 360 | 900 |

* Wie auch in allen nachfolgenden Tabellen bedeuten die in der ersten Reihe angegebenen Gew.-Tle an Natriumalkansulfonatlösung stets die Gesamtteile, die zugegeben worden sind.

**Tabelle 1b**

Vorgelegt: 200 Gew.-Teile

Dispersion B

| Zugabe in Gew.-Tln insgesamt an 9,5 %iger wäßriger Natriumalkanpoly- sulfonatlösung, hergestellt gemäß A-2 (kochsalz- und monosulfonat-frei = | 0 | 0,6 | 0,8 | 1,0 | 1,2 | 1,4 | 1,6 |
|---|---|---|---|---|---|---|---|
| **Brookfield-Viskosimeter spindel 4, 22°C** | | | | | | | |
| Umdrehungen pro Minute (RPM): | | | | | | | |
| 6 RPM, Viskosität in mPas | 55 000 | 18 100 | 5 010 | 3 800 | 1 800 | 1 200 | 700 |
| 12 RPM, Viskosität in mPas | 26 000 | 14 800 | 4 980 | 4 615 | 2 100 | 1 180 | 710 |
| 30 RPM, Viskosität in mPas | 13 900 | 9 150 | 4 320 | 3 580 | 2 00 | 1 400 | 750 |
| 60 RPM, Viskosität in mPas | 8 360 | 5 460 | 3 200 | 2 950 | 1 500 | 1 250 | 700 |

**Beispiel 2** (erfindungsgemäß)

Zu 200 Teilen der nach C hergestellten hochviskosen Polybutadiendispersion werden unter Rühren (200 Umdrehungen pro Minute) insgesamt 1,0; 1,2; 1,4; 1,6 Teile einer 9,5 %igen wäßrigen Lösung des nach A hergestellten Natriumalkanpolysulfonats bei t = 22°C zugesetzt.

Die erste Portion (1,0 Teile) kommt auf einmal hinzu, die nachfolgenden Portionen werden in Schritten von 0,2 Teilen hinzugegeben (vgl. Tabelle 2).

Den in Tabelle 2 angegebenen Prüfwerten ist der starke viskositätsmindernde Effekt des Polysulfonatzusatzes zu entnehmen. Der Effekt ist anhaltend, denn nach mehrwöchigem Stehen ergeben sich praktisch dieselben Meßergebnisse bezüglich der Brookfield-Viskosität.

Durch den Polysulfonatzusatz gemäß Tabelle 2 wurde die Teilchengröße der Dispersion nicht verändert. Wurde am Ausgangslatex ein mittlerer Latexteilchendurchmesser von ca. 33 nm gefunden, so lag der Latexteilchendurchmesser nach Zugabe der Polysulfonatlösung ebenfalls bei 33 nm, gemessen mit Hilfe der Laserkorrelationsspektroskopie.

Bei Zusatz der Polysulfonatlösung zu der pastösen, anfänglich kaum rührbaren Dispersion trat keinerlei Koagulatbildung auf. Auch konnte keine Schaumbildung festgestellt werden. Nach Zusatz von 1,6 Gew.-Tln 9,5 %iger wäßriger Polysulfonatlösung zu 200 Gew.-Tln Dispersion war der Latex bequem zu rühren, und er konnte aus dem Gefäß ausgegossen werden.

**Tabelle 2**

Vorgelegt: 200 Teile

Dispersion C

| Zugabe in Gew.-Tln insgesamt an 9,5 %iger wäßiger Natriumalkanpoly- sulfonatlösung, hergestellt gemäß A1 | 0 | 1,0 | 1,2 | 1,4 | 1,6 |
|---|---|---|---|---|---|
| **Brookfield-Viskosimeter Spindel 4, 22°C** | | | | | |
| Umdrehungen pro Minute (RPM): | | | | | |
| 6 RPM, Viskosität in mPas | >100 000 | 15 700 | 9 700 | 6 800 | 4 600 |
| 12 RPM, Viskosität in mPas | >100 000 | 13 600 | 8 750 | 6 750 | 4 650 |
| 30 RPM, Viskosität in mPas | >100 000 | 9 520 | 5 960 | 5 740 | 4 140 |
| 60 RPM, Viskosität in mPas | >100 000 | 6 470 | 5 130 | 4 490 | 3 430 |

**Vergleichsbeispiel 1** (zu Beispiel 1)

Zu 200 Teilen der nach B hergestellten Polybutadiendispersion werden unter Rühren (200 Umdrehungen pro Minute) insgesamt 0,6; 0,8; 1,0; 1,2; 1,4; 1,6; 2,0; 3,0; 4,0: 5,0; 7,0; 9,0 Teile einer 9,5 %igen wäßrigen Lösung einer auf dem gleichen Paraffinschnitt wie in A angegeben basierenden Natriumalkanmonosulfonatlösung mit 13-17 C-Atomen im Alkanrest bei t = 22°C zugesetzt.

Die Messungen werden, wie in Beispiel 1 beschrieben, durchgeführt.

Den in Tabelle 3 angegebenen Prüfwerten ist zu entnehmen, daß bei Zugabe einer Natriumalkanmonosulfonatlösung zur Dispersion B zwar eine gewisse Viskositätsminderung zu beobachten ist, diese ist jedoch weit geringer als die durch den Natriumalkanpolysulfonatzusatz bewirkte Viskositätsänderung (vergleiche Tabelle 3 mit Tabelle 1a oder 1b).

Außerdem neigt der zugrundeliegende Polybutadienlatex nach der Natriumalkanmonosulfonatzugabe sehr stark zum Schäumen, was sich in schwankenden und schlecht reproduzierbaren Viskositätsmessungen bemerkbar macht.

**Tabelle 3**

Vorgelegt: 200 Tle
Dispersion B

| Zugabe in Gew.-Tln insgesamt an 9,5 %iger wäßriger Natriumalkanmonosulfonatlösung | 0 | 0,6 | 0,8 | 1,0 | 1,2 | 1,4 | 1,6 | 2,0 | 3,0 | 4,0 | 5,0 | 7,0 | 9,0 |
|---|---|---|---|---|---|---|---|---|---|---|---|---|---|
| **Brookfield-Viskosimeter Spindel 4, 22°C** Umdrehungen pro Minute (RPM): | | | | | | | | | | | | | |
| 6 RPM, Viskosität in mPas | 55 000 | 48 700 | 48 100 | 47 800 | 43 100 | 42 200 | 42 100 | 42 000 | 25 600 | 21 400 | 20 300 | 7 500 | 3 500 |
| 12 RPM, Viskosität in mPas | 26 000 | 26 150 | 26 200 | 27 350 | 26 120 | 25 300 | 26 150 | 27 150 | 17 350 | 15 500 | 14 850 | 6 950 | 3 300 |
| 30 RPM, Viskosität in mPas | 13 900 | 12 640 | 12 640 | 13 640 | 12 890 | 12 400 | 12 500 | 13 080 | 9 440 | 8 840 | 8 900 | 5 120 | 2 940 |
| 60 RPM, Viskosität in mPas | 8 360 | 7 390 | 7 400 | 7 770 | 7 510 | 7 470 | 7 420 | 7 430 | 5 660 | 5 370 | 5 520 | 3 570 | 2 440 |

**Vergleichsbeispiel 2** (zu Beispiel 2)

Zu 200 Teilen der nach C hergestellten hochviskosen Polybutadiendispersion werden unter Rühren (200 Umdrehungen pro Minute) insgesamt 0,6; 1,2; 1,4; 1,6; 7,6; 9,6; 11,6; 16,6 Teile Wasser bei t = 22°C zugesetzt.

Es konnte erwartet werden, daß durch den Wasserzusatz die Viskosität der Dispersion herabgesetzt wird (vgl. Tabelle 4), jedoch reichen Zusätze bis insgesamt 1,6 Teile Wasser (vgl. hierzu Tabelle 2, wo 1,6 Teile Polysulfonatlösung zur Überführung in einen fließfähigen Zustand ausreichten) zur deutlichen Viskositätsminderung noch nicht aus. Erst nach Zusätzen ab 7,6 Gew.-Tle. Wasser wird ein sichtbarer Effekt erreicht und erst nach der 10-fachen Wassermenge (= 16,6 Gew.-Tle.) wird eine Viskosität gemessen (5070 mPas), die etwa der entspricht, die nach Zusatz von 1,6 Gew.-Tln 9,5 %iger wäßriger Natriumalkansulfonatlösung (4600 mPas) gemessen wird.

**Tabelle 4**

Vorgelegt:
200 Teile Dispersion C

Brookfield-Viskosisimeter
Spindel 4 22°C

Zugabe in Gew.-Tln. Wasser

| Umdrehungen pro Minute (RPM) | 0 | 0,6 | 1,2 | 1,4 | 1,6 | 7,6 | 9,6 | 11,6 | 16,6 |
|---|---|---|---|---|---|---|---|---|---|
| 6 RPM* | Größer als 100 000 mPas | | | | | 32 300 | 28 600 | 21 700 | 5 070 |
| 12 RPM* | | | | | | 23 150 | 20 950 | 17 000 | 5 500 |
| 30 RPM* | | | | | | 13 020 | 12 140 | 10 660 | 4 660 |
| 60 RPM* | | | | | | 8 040 | 7 580 | 6 940 | 3 720 |

* Viskosität i mPas

**Beispiel 3** (erfindungsgemäß)

Der gemäß D hergestellte, entmonomerisierte, 38 %ige Butadien-Styrol-Latex, Teilchengröße 55 nm, weist das in Tabelle 5 Spalte 1 angegebene Viskositätsverhalten auf.

Durch den Zusatz von Natriumalkanpolysulfonatlösung gemäß A-1 tritt, wie bei den Polybutadienlatices in Beispiel 1 und 2 geschildert wurde, auch hier eine deutlich ausgeprägte Viskositätsminderung ein, welche nachhaltig wirkt (vgl. Tabelle 5, Spalten 2 bis 9).

**Tabelle 5**

Vorlage 200 Teile
Latex gemäß D, 38 %ig
entmonomerisiert

Zusatz insgesamt an Teilen 9,5 %iger Natriumalkanpolysulfonatlösung gemäß A-1

| Brookfield-Viskosimeter Messung bei 22°C, Spindel 4 Undrehungen pro Minute (RPM) | 0 | 0,4 | 0,6 | 0,8 | 1,0 | 1,2 | 1,4 | 1,6 | 2,2 |
|---|---|---|---|---|---|---|---|---|---|
| 6 RPM, Viskosität mPas | 51 100 | 42 400 | 33 000 | 27 800 | 23 300 | 18 400 | 11 600 | 7 200 | 2 300* |
| 12 RPM, Viskosität mPas | 25 500 | 23 000 | 18 450 | 16 050 | 14 050 | 11 650 | 8 600 | 5 900 | 2 050 |
| 30 RPM, Viskosität mPas | 10 860 | 10 140 | 8 540 | 7 600 | 6 900 | 6 000 | 4 920 | 3 840 | 1 800 |
| 60 RPM, Viskosität mPas | 5 930 | 5 610 | 4 830 | 4 440 | 3 960 | 3 550 | 3 040 | 3 040 | 1 470 |

* Latex nach Zusatz von 2,2 Teilen 9,5 %iger Natriumalkanpolysulfonatlösung besitzt eine Auslaufzeit von 9 Sekunden im Auslaufbecher nach DIN 53 211 (8 mm Düse).

**Beispiel 4** (erfindungsgemäß)

Werden zu der gemäß E erhältlichen feinteiligen, viskosen, nicht fließfähigen und schaumigen Dispersion, welche einen Feststoffgehalt von ca. 32 % besitzt, 1 Gew.-% festes Polysulfonat nach A-1, bezogen auf Feststoff der Dispersion, in Form einer 10 %igen wäßrigen Lösung hinzugegeben, so bricht der Schaum zusammen, die Dispersion läßt sich ausrühren und wird dabei dünnflüssig. Sie kann anschließend im Vakuum in üblicher Weise ohne Koagulatbildung und Änderung der Latexteilchengröße von Restmonomeren befreit werden. Die entmonomerisierte Dispersion besitzt folgende Merkmale:

Teilchengröße nach Laserkorrelationsspektroskopie: 41 nm
Feststoffgehalt: 34,6 %.

Auslaufzeit im Auslaufbecher nach DIN 53 211 (4 mm Düse) 22,7 Sekunden. Die Brookfield-Viskosität bei 22°C, 6 RPM, Spindel 4 betrug weniger als 100 mPas. Mit Spindel 1 und 6 RPM, 22°C wurden 83 mPas gemessen.

12

**Patentansprüche**

Verfahren zur Herstellung einer unter Normalbedingungen fließfähigen, wäßrigen Dispersion auf Basis von Homo- und Copolymerisaten konjugierter Diene mit Feststoffgehalten von 25 bis 55 Gew.-% und durchschnittlichen Latexteilchendurchmessern von 20 bis 150 nm, dadurch gekennzeichnet, daß in einer nach üblichen Verfahren hergestellten, unter Normalbedingungen nicht fließfähigen, von Alkanpolysulfonatsalzen freien, wäßrigen Dispersion auf Basis von Homo- und Copolymerisaten konjugierter Diene 0,05 bis 0,5 Gew.-%, bezogen auf Feststoffgehalt der Dispersion, eines wasserlöslichen Salzes mindestens eines Alkanpolysulfonats in Form einer 5-30 Gew.-%igen wäßrigen Lösung gleichmäßig verteilt und in der wäßrigen Phase der Dispersion gelöst wird.

**Claim**

Process for the production of an aqueous dispersion, which is based on homo- and copolymers of conjugated dienes, is flowable under normal conditions and has solids contents of 25 to 55% by weight and average latex particle diameters of 20 to 150 nm, characterised in that 0.05 to 0.5% by weight, based on the solids content of the dispersion, of a water-soluble salt of at least one alkane polysulphonate in the form of a 5-30% by weight aqueous solution is uniformly distributed in an aqueous dispersion which is based on homo- and copolymers of conjugated dienes, is free from alkane polysulphonate salts, is non-flowable under normal conditions and has been produced by customary methods, and is dissolved in the aqueous phase of the dispersion.

**Revendication**

Procédé de préparation d'une dispersion aqueuse, fluide dans les conditions normales, à base d'homo- et de co-polymères de diènes conjugués, à des teneurs en matières solides de 25 à 55% en poids et des diamètres de particules moyens de latex de 20 à 150 nm, caractérisé en ce que, dans une dispersion aqueuse préparée par des procédés usuels, incapable de s'écouler dans les conditions normales, exempte de sels d'alcane-polysulfonates, à base d'homo- et de co-polymères de diènes conjugués, on répartit uniformément 0,05 à 0,5 % en poids, par rapport aux matières solides de la dispersion, d'un sel hydrosoluble d'au moins un alcane-polysulfonate à l'état de solution aqueuse à une teneur de 5 à 30 % en poids et on le dissout dans la phase aqueuse de la dispersion.